# EUROPEAN PATENT SPECIFICATION

(11) **EP 3 001 150 B1**
(45) Date of publication and mention of the grant of the patent: **01.02.2017**
(21) Application number: 15184026.1
(22) Date of filing: 07.09.2015
(51) Int. Cl.: G01D 7/00, G01D 11/28, G01D 13/18, G01D 13/20, G01D 13/28

(54) **INSTRUMENTAL DEVICE**
INSTRUMENTELLE VORRICHTUNG
DISPOSITIF INSTRUMENTAL

(30) Priority: 24.09.2014 JP 2014193524
(43) Date of publication of application: 30.03.2016
(73) Proprietor: NIPPON SEIKI CO., LTD., Nagaoka-shi Niigata 940-8580 (JP); Honda Motor Co., Ltd., Tokyo 107-8556 (JP)
(72) Inventor: IKENO, Mitsuru, Nagaoka-shi, Niigata 940 8580 (JP); KAWASAKI, Hiroaki, Saitama, Niigata 351-0193 (JP); NANAURA, Makoto, Haga-gun, Niigata 321-3325 (JP)
(74) Representative: Herzog, Markus

(56) References cited:
- EP-A1- 2 052 901
- DE-A1-102005 047 239
- GB-A- 2 481 895
- JP-A- 2006 275 677
- US-A1- 2002 135 995
- US-A1- 2010 188 835

## Description

This application relates to an instrumental device.

As a conventional instrumental device, for example, an instrumental device disclosed in Unexamined Japanese Patent Application Kokai Publication No. 2011-13154 is known. This instrumental device is mounted on a vehicle, and includes a dial plate on which indexes are arranged, a light-shielding ring provided to an outer periphery of the dial plate, and a light guide including a three-dimensional graduation that penetrates the ring and projects toward a passenger side. In this instrumental device, the light guide guides light from a light source, thereby allowing the three-dimensional graduation to radiate.

The instrumental device according to Unexamined Japanese Patent Application Kokai Publication No. 2011-13154 merely allows the three-dimensional graduation to radiate, and thus can be further improved in terms of originality.

The present disclosure is made in view of the actual circumstance as described above, and an objective of the present disclosure is to provide an instrumental device having an original appearance.

To achieve the above objective, an instrumental device according to the present disclosure is an instrumental device in which graduations are arranged in an indication range of a pointer that rotates, the device including:
a frame member provided in such a manner as to surround the pointer and having a light-shielding property;
a plate positioned on a rear side of the frame member;
a translucent frame positioned between the frame member and the plate, overlapping with the frame member from a view in a normal direction of a plane of the plate that faces the frame member, and protruding beyond at least one of an inner periphery side and an outer periphery side of the frame member;
a three-dimensional graduation projecting from the plate toward the frame member; and
light sources positioned on the rear side of the plate,
wherein insertion portions each made of a notch or an aperture into which the three-dimensional graduation is made to insert are formed in the frame member, and the three-dimensional graduation exposed out of the insertion portions represents the graduations,
a transmitter transmitting light from the light sources is formed in a region of the plate that is covered by the translucent frame from the view in the normal direction, and
the translucent frame receives the light that has been emitted from the light sources and has transmitted through the transmitter so as to radiate.

The instrumental device may be configured such that the instrumental device comprises:
a light guide for graduation positioned on the rear side of the plate and integrally formed with the three-dimensional graduation; and
in addition to the first light sources that are the light sources, second light sources positioned on the rear side of the plate and emitting light toward the light guide for graduation,
wherein the translucent frame receives the light that has been emitted from the first light sources and has transmitted through the transmitter so as to radiate, and
the three-dimensional graduation has a translucent property, penetrates through apertures provided in the plate, and the insertion portions so as to be exposed out of the frame member, and radiates with light emitted from the second light sources and guided by the light guide for graduation.

The instrumental device may be configured such that the instrumental device comprises: a case on which the plate is placed,
wherein, in the case, a wall separating a passage through which light from the first light sources passes before allowing the translucent frame to radiate from a passage through which light from the second light sources passes before allowing the three-dimensional graduation to radiate is formed.

The instrumental device may be configured such that the instrumental device further comprises: a light guide for frame facing the translucent frame with the plate interposed therebetween,
wherein the case includes a first concave that houses the light guide for frame, and a second concave that houses the light guide for graduation, and
the wall is provided between the first concave and the second concave.

The instrumental device may be configured such that at least one of the first light sources and the second light sources can emit light in two or more colors, and
the three-dimensional graduation and the translucent frame can be made to radiate in corresponding colors different from each other.

According to the present disclosure, the instrumental having an original appearance can be provided.

A more complete understanding of this application can be obtained when the following detailed description is considered in conjunction with the following drawings, in which:
FIG. 1 is a plan view of an instrumental device according to an embodiment of the present disclosure;
FIG. 2 is a sectional view taken along line A-A of the instrumental device illustrated in FIG. 1;
FIG. 3 is a perspective view of a frame member, a translucent frame, a plate, and a three-dimensional graduation;
FIG. 4 is a schematic plan view illustrating a structure of a case and an arrangement of each light source;
FIG. 5 is a plan view of a light guide for frame;
FIG. 6A is a sectional view taken along line B-B of the instrumental device illustrated in FIG. 1; and
FIG. 6B is a sectional view taken along line C-C of the instrumental device illustrated in FIG. 1.

An instrumental device according to an embodiment of the present disclosure will be described with reference to the accompanying drawings.

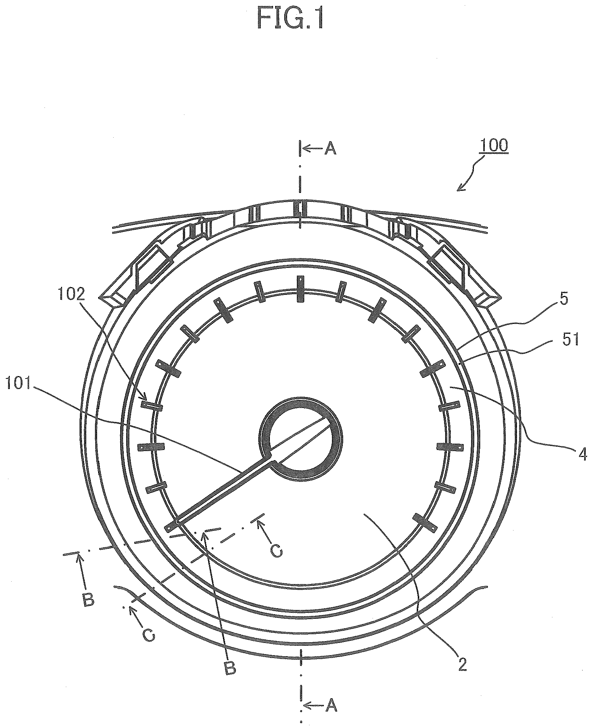

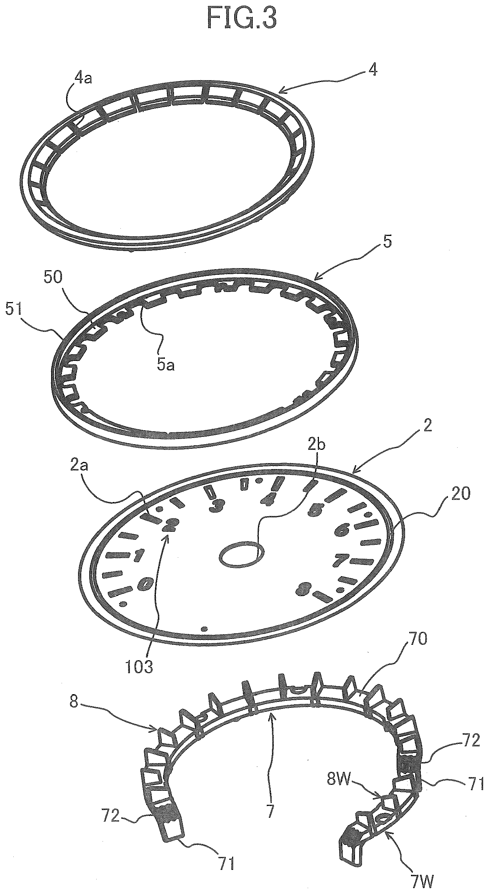

As illustrated in FIG. 1, an instrumental device 100 according to this embodiment allows a pointer 101 that rotates to be compared with graduations 102 arranged in an indication range of the pointer 101 and numbers 103 (see FIG. 3). A user recognizes a predetermined measured value on the basis of a position of the pointer 101 relative to the graduations 102 and the numbers 103.

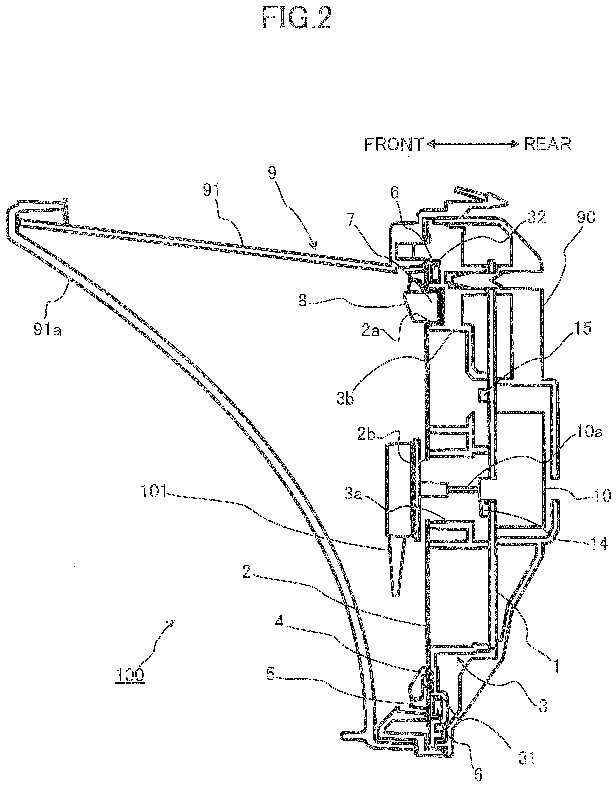

The instrumental device 100 is mounted on a vehicle, for example, and notifies an engine rotational speed, a vehicle speed, or the like. Although measured values to be notified are not limited, hereinafter, in order to facilitate the understanding of the description, the instrumental device 100 is, for example, a tachometer. Further, hereinafter, the description will be made by defining a user side on which a measured value is visually recognized as front side and a side opposite thereto as rear side (see FIG. 2) with respect to each component composing the instrumental device 100.

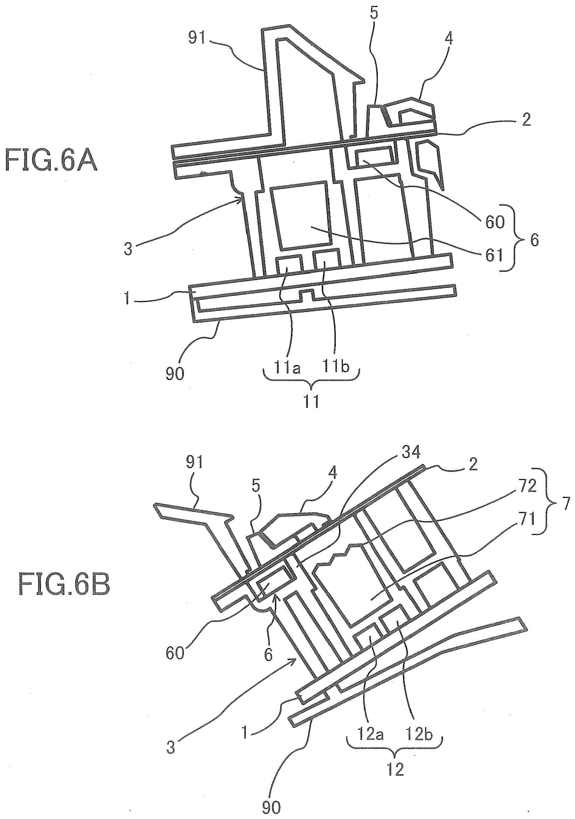

As illustrated in FIGS. 1 to 6A, B, the instrumental device 100 includes a circuit board 1, a dial plate 2 (example of a plate), an interior case 3, a frame member 4, a translucent frame 5, a light guide for frame 6, a light guide for graduation 7, a three-dimensional graduation 8, and a casing 9.

Although FIG. 2 is a sectional view taken along line A-A of the instrumental device 100, FIG. 6A is a sectional view taken along line B-B, and FIG. 6B is a sectional view taken along line C-C, in these drawings, hatching indicating a section is omitted for visual clarity.

The circuit board 1 is a printed circuit board in which a predetermined wiring pattern is formed on a plate-shaped base made of a resin containing glass fibers, and the like. On the circuit board 1, a motor 10, first light sources 11, second light sources 12, a third light source 13, a light source for pointer 14, a light source for dial plate 15, a controller (unillustrated), and the like are mounted.

The controller mounted on the circuit board 1 includes a microcomputer, and a driver for driving each light source and the motor 10. The controller drives the motor 10 on the basis of the engine rotational speed transmitted from an electronic control unit (ECU) of the vehicle through a communication line. The motor 10 includes, for example, a stepper motor and rotates a rotating shaft 10a under control by the controller in accordance with the engine rotational speed. The pointer 101 is attached to the rotating shaft 10a, and rotates as the rotating shaft 10a rotates. The pointer 101 rotates on the dial plate 2, and indicates a part according to the engine rotational speed. The pointer 101 includes a light guide member (unillustrated) that receives light from the light source for pointer 14 and guides the same to a tip end, and radiates.
Each of the light source 11-15 comprises, for example, a light emitting diode (LED), and emits light toward the front side of the instrumental device 100.

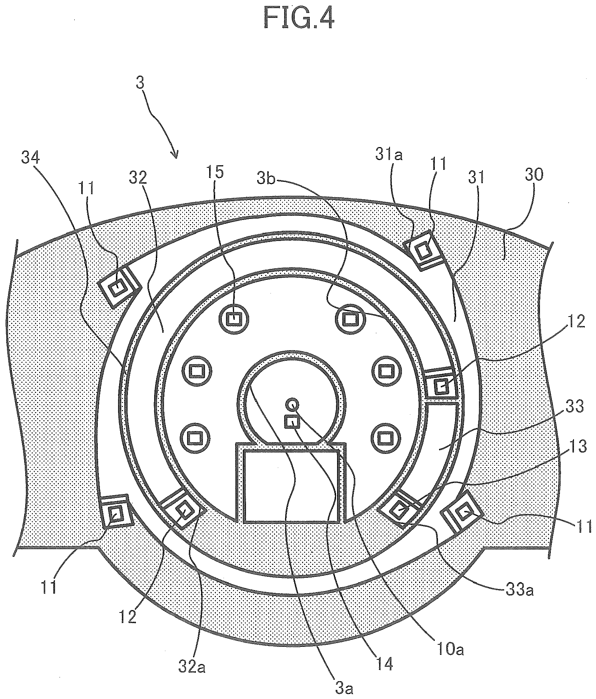

Here, an application of each light source will be described. The first light sources 11 are provided to illuminate the translucent frame 5, the second light sources 12 are provided to illuminate the three-dimensional graduation 8, the third light source 13 is provided to illuminate a three-dimensional graduation 8W as described below, the light source for pointer 14 is provided to illuminate the pointer 101, and the light source for dial plate 15 is provided to illuminate the numbers 103 formed on the dial plate 2.
From among each light source, particularly, the first light sources 11 and the second light sources 12 are each configured to be capable of emitting light in two or more colors. In FIG. 4, an arrangement of the first light sources 11 and the second light sources 12 relative to the interior case 3 is schematically illustrated. Specifically, as illustrated in FIG. 6A, each first light source 11 comprises two light sources 11a, 11b that emit light in colors different from each other. Similarly, as illustrated in FIG. 6B, each second light source 12 comprises two light sources 12a, 12b that emit light in colors different from each other. Further, under control by the controller, the light source 11a and the light source 11b that are included in each first light source 11 are enabled such that one lights up while the other lights out, both light up, or both light out. Similarly, the light source 12a and the light source 12b that are included in each second light source 12 are also enabled such that one lights up while the other lights out, both light up, or both light out.

By these combinations, for example, each first light source 11 and each second light source 12 are configured to be enabled such that one lights up in white color while the other lights up in a monochromatic color other than white color, or one lights up in white color while the other lights up in a compound color other than white color. In this manner, the instrumental device 100 is configured such that the three-dimensional graduation 8 and the translucent frame 5 can radiate in colors different from each other. An illumination structure will be described below in detail. Note that switching light-up colors of each first light source 11 and each second light source 12 is performed in accordance with a user operation from the unillustrated controller or change of vehicle state information transmitted from the ECU or the like to the controller.
The dial plate 2 is configured such that, for example, printing is performed on a penetrable member made of a translucent resin. The dial plate 2 is positioned on the front side of the circuit board 1 with the interior case 3 interposed therebetween. As illustrated in FIG. 3, the dial plate 2 is formed into a disk shape. Although, on a rear surface of the dial plate 2, a light-shielding print layer (in black color, for example) is formed over substantially the entire surface, the light-shielding print layer is not formed on a part, and this part is accordingly formed into a cut-out letter shape. With this cut-out letter portion, the dial plate 2 represents the numbers 103.

Similarly, on the dial plate 2, a ring-shaped transmitter 20 on which a light-shielding print is not performed is formed. As illustrated in FIG. 3, the transmitter 20 is formed in such a manner as to surround the numbers 103 arranged in a circumferential direction of the dial plate 2. The transmitter 20 is provided to transmit light from the first light sources 11 to the translucent frame 5 arranged on the front side of the dial plate 2.

Further, the dial plate 2 includes apertures 2a that allow the three-dimensional graduation to penetrate toward the front side, and an aperture 2b that allows the rotating shaft 10a of the motor 10 to penetrate toward the front side.
The interior case 3 is made of, for example, a white polypropylene (PP) resin and is positioned on the front side of the circuit board 1. The dial plate 2 is placed on a top panel 30 of the interior case 3.
As illustrated mainly in FIG. 4, the interior case 3 includes a first illumination chamber 3a, a second illumination chamber 3b, a first concave 31, a second concave 32, and a third concave 33. These are arranged in a manner concentric about the rotating shaft 10a of the motor 10 in an order of the first illumination chamber 3a, the second illumination chamber 3b, the second concave 32, and the first concave 31. The third concave 33 is formed adjacent to the second concave 32 along a circumferential direction in which the second concave 32 extends. The first illumination chamber 3a is provided to efficiently guide light from the light source for pointer 14 to the pointer 101, and also serves as an opening that allows the rotating shaft 10a of the motor 10 to reach over the dial plate 2.
The second illumination chamber 3b is provided to efficiently guide light from the light source for dial plate 15 to the dial plate 2, and is provided in such a manner as to surround the first illumination chamber 3a. In the second illumination chamber 3b, a portion facing the light source for dial plate 15 opens, and can take light from the light source for dial plate 15 into the second illumination chamber 3b.
The second concave 32 is provided to house the light guide for graduation 7, and is a portion formed in such a manner as to be recessed from the top panel 30 of the interior case 3 toward the rear side. The second concave 32 is provided in such a manner as to surround the second illumination chamber 3b. As illustrated in FIG. 4, the second concave 32 is formed into a horseshoe shape and positioned on the rear side of the plurality of apertures 2a circularly arranged in the dial plate 2. On one end and the other end of the second concave 32, an aperture 32a is each provided. The second light sources 12 are arranged at corresponding positions each facing this aperture 32a so that light from the second light sources 12 can reach the light guide for graduation 7.
The third concave 33 is provided to house a light guide 7W, as illustrated in FIG. 3, configured in a manner similar to the light guide for graduation 7. The third concave 33 is positioned at an extended line in a circumferential direction identical to that of the second concave 32. On one end of the third concave 33, an aperture 33a for allowing light from the third light source 13 to reach the light guide 7W is provided. The other end of the third concave 33 is positioned adjacent to the second concave 32.

The third concave 33 is positioned on the rear side of an end, for example, a portion corresponding to "7" to "8" from among the numbers 103 in FIG. 3, from among the plurality of apertures 2a circularly arranged in the dial plate 2.

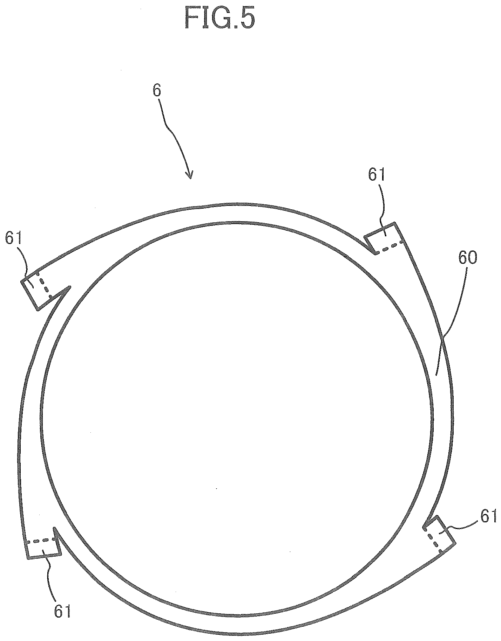

The second concave 32 and the third concave 33 are provided in the interior case 3 over a formation range of the plurality of apertures 2a.
The first concave 31 is provided to house the light guide for frame 6 as illustrated in FIG. 5, and is formed in such a manner as to be recessed from the top panel 30 of the interior case 3 toward the rear side. The first concave 31 has, as illustrated in FIG. 4, a substantially ring shape from a plan view, and is provided in such a manner as to surround the second concave 32 and the third concave 33. Specifically, the substantially ring-shaped first concave 31 includes portions deviating from a circumferential direction thereof to an outer radial direction, and is formed into a windmill-like shape. Moreover, on the portions deviating to the outer radial direction, an aperture 31a is each provided. The first light sources 11 are arranged at corresponding positions facing the corresponding aperture 31a so that light from the first light sources 11 can reach the light guide for frame 6.
Between those who are adjacent to each other from among the first illumination chamber 3a, the second illumination chamber 3b, the first concave 31, the second concave 32, and the third concave 33, a wall is formed in such a manner as to prevent light emitted from the light source positioned in each interior from interfering with light emitted from the other light sources. An upper end of each wall has a surface level substantially the same as that of the top panel 30 of the interior case 3. In FIG. 4, this substantially the same surface level portion is indicated by dots with color.

From among these walls, particularly a wall 34 between the first concave 31 and the second concave 32 is formed in such a manner as to separate a passage through which light from the first light sources 11 passes before allowing the translucent frame 5 to radiate from a passage through which light from the second light sources 12 passes before allowing the three-dimensional graduation 8 to radiate.
The frame member 4 is formed into a ring shape, and is provided in such a manner as to surround the pointer 101, as illustrated in FIG. 1. The frame member 4 is positioned on the front side of the dial plate 2 and covers the transmitter 20 formed on the dial plate 2 from a plan view (view in a normal direction of a plane on the front side of the dial plate 2). The frame member 4 is formed, for example, by depositing by evaporation a metal member on a surface of a ring-shaped resin member, and is treated to have a metal-like appearance. Moreover, the frame member 4 has a light-shielding property. Moreover, the frame member 4 is provided, by printing, with secondary graduations (unillustrated) positioned between graduations 102 (main graduations) represented by the three-dimensional graduation 8.
As illustrated in FIG. 3, insertion portions 4a each made of a notch into which the three-dimensional graduation 8 is made to insert toward the front side are formed in the frame member 4. Note that the insertion portions 4a may be apertures provided in the frame member 4.
As illustrated in FIG. 3, the translucent frame 5 is made of a resin member having a translucent property, and is formed into a ring shape. The translucent frame 5 is positioned between the frame member 4 and the dial plate 2. The translucent frame 5 is configured to overlap with the frame member 4 from a plan view, and, as illustrated in FIG. 1, protrude beyond an outer periphery side of the frame member 4.

Specifically, the translucent frame 5 has a section formed into an L-shape as illustrated in FIGS. 6A, 6B, and includes a bottom surface 50 and a side wall 51 as illustrated in FIG. 3. The bottom surface 50 is a portion that supports the rear side of the frame member 4. The side wall 51 is a portion that stands from an outer periphery edge of the bottom surface 50 toward the front side and protrudes beyond the outer periphery side of the frame member 4 from a plan view. A surface of the side wall 51 on the front side that is exposed in this manner has been subjected to a diffusing treatment through a graining, or the like. The side wall 51 of the translucent frame 5 radiates with light from the first light sources 11 as described below, and can emit soft and homogeneous light due to the diffusing treatment that has been performed as described above, which provides a good appearance.
Further, as illustrated in FIG. 3, in the bottom surface 50 of the translucent frame 5, escapes 5a each made of a notch are formed to allow the three-dimensional graduation 8 to penetrate from the rear side to the frame member 4. The escapes 5a may not be notches but apertures provided in the bottom surface 50. Still further, without notches or apertures, such a configuration that the translucent frame 5 is finely formed so as to allow the three-dimensional graduation 8 to penetrate from the rear side to the frame member 4 may be employed.
The light guide for frame 6 is made of a resin material having a translucent property, guides light emitted from the first light sources 11, and illuminates in a ring-shaped manner the dial plate 2 from the rear side. The light guide for frame 6 is housed in the first concave 31 of the interior case 3 in such a manner as to fit in the same. As is clear from the comparison between FIG. 5 and FIG. 4, the light guide for frame 6 is formed into a shape similar to that of the first concave 31, that is, into a windmill-like shape.

Specifically, the light guide for frame 6 includes a ring 60 along the transmitter 20 of the dial plate 2, and light receivers 61 that deviate from a circumferential direction of the ring 60 to the outer radial direction and are formed in such a manner as to be suspended to the rear side. The light receivers 61 face the corresponding first light sources 11 and receives light emitted from the corresponding first light sources 11.
The light from the first light sources 11 that has come from the light receivers 61 into the light guide for frame 6 is guided to the ring 60 and allows the ring 60 to radiate. Thereby, the light guide for frame 6 illuminates in a ring-shaped manner the dial plate 2 from the rear side. Illumination light from the light guide for frame 6 is transmitted through the transmitter 20 of the dial plate 2, reaches the translucent frame 5, and allows the translucent frame 5 to radiate. Thereby, the side wall 51 of the translucent frame 5 that protrudes beyond the frame member 4 from a view of the user glitters.
The light guide for graduation 7 is made of a resin material having a translucent property, guides light emitted from the second light sources 12, and allows the three-dimensional graduation 8 to radiate. As illustrated in FIG. 3, the light guide for graduation 7 and the three-dimensional graduation 8 are integrally formed. The light guide for graduation 7 is housed in the second concave 32 of the interior case 3 in such a manner as to fit in the same. As is clear from the comparison between FIG. 3 and FIG. 4, the light guide for graduation 7 is formed into a horseshoe shape similar to that of the second concave 32.

Specifically, the light guide for graduation 7 includes a body 70 on which the three-dimensional graduation 8 is provided, and light receivers 71 formed in such a manner as to be suspended from both ends of the body 70 to the rear side. The light receivers 71 face the corresponding second light sources 12 and receive light emitted from the corresponding second light source 12. Further, diffusion reflectors 72 that diffusively reflect light from the corresponding second light sources 12 that has come from the corresponding light receivers 71 to the body 70 are formed on corresponding inclined portions between the body 70 and the corresponding second light receivers 71. As illustrated in FIG. 6B, each of the diffusion reflectors 72 is a groove having a serrated section. Note that a shape of the diffusion reflectors 72 is not limited to this, provided that the diffusion reflectors 72 can efficiently diffusively reflect light from the corresponding second light sources 12. The light from the second light sources 12 that has come from the light receivers 71 into the light guide for graduation 7 is diffusively reflected by the diffusion reflectors 72, and is guided to the body 70. The light guided to the body 70 allows the three-dimensional graduation 8 to radiate.
The three-dimensional graduation 8 is formed in such a manner as to project from the body 70 toward the front side. The three-dimensional graduation 8 penetrates through the apertures 2a of the dial plate 2, the escapes 5a of the translucent frame 5, and the insertion portions 4a of the frame member 4 so as to be exposed to the front side of the frame member 4.

Thereby, portions of the three-dimensional graduation 8 that are exposed out of the frame member 4 from a view of the user represent the graduations 102 and glitter with light from the second light sources 12.
The light guide 7W housed in the third concave 33 has a function and a configuration that are similar to those of the light guide for graduation 7. Different from the light guide for graduation 7, the light guide 7W does not receive light from both ends thereof, but receives light emitted from the third light source 13 from one end. Since the light guide 7W is similar to the light guide for graduation 7 with respect to the other respects, the detailed description thereof will be omitted. Since the three-dimensional graduation 8W has a function and a configuration that are similar to those of the three-dimensional graduation 8, the detailed description thereof will be omitted. Further, the third light source 13 lights up in a color different from that of the second light sources 12. For example, the third light source 13 lights up in red color to illuminate gradations corresponding to a range according to which the engine rotational speed is supposed to be abnormal.
The casing 9 is formed to house each component as described above. The casing 9 includes a rear case 90 and a front case 91 that are made of a light-shielding resin, and a cover glass 91 a provided to the front case 91. For example, the rear case 90 is fitted to the interior case 3 by a hook or the like, and the front case 91 is fitted to the rear case 90 by a hook or the like. Further, the front case 91 and the interior case 3 sandwiches the dial plate 2 therebetween, thereby fixing the dial plate 2. The transparent cover glass 91a is fixed to an opening end of the front case 91. The user can visually recognize through the cover glass 91a the pointer 101 and the dial plate 2 inside.
Hereinafter, how the translucent frame 5 and the three-dimensional graduation 8 radiate will be described.

### (Radiation of the translucent frame 5)

Light emitted from the first light sources 11 come from the corresponding light receivers 61 facing the corresponding first light sources 11 into the light guide for frame 6. The light that has come into the light guide for frame 6 allows the ring 60 to radiate. Thereby, the light guide for frame 6 illuminates in a ring-shaped manner the dial plate 2 from the rear side. Illumination light from the light guide for frame 6 is transmitted through the transmitter 20 of the dial plate 2, reaches the translucent frame 5, and allows the translucent frame 5 to radiate. Thereby, the side wall 51 of the translucent frame 5 that protrudes beyond the frame member 4 from a view of the user glitters.

### (Radiation of the three-dimensional graduation 8)

Light emitted from the second light sources 12 come from the corresponding light receivers 71 facing the corresponding second light sources 12 into the light guide for graduation 7. The light that has come into the light guide for graduation 7 is diffusively reflected by the diffusion reflectors 72, and is guided to the body 70. The light guided to the body 70 allows the three-dimensional graduation 8 provided on the body 70 to radiate. Thereby, portions, which represent the graduations 102, of the three-dimensional graduation 8 that penetrate through the corresponding insertion portions 4a and are exposed on the front side of the frame member 4 glitter from a view of the user.
The wall 34 provided in the interior case 3 is positioned between the light guide for frame 6 and the light guide for graduation 7. As described above, the wall 34 is formed in such a manner as to separate a passage through which light from the first light sources 11 passes before allowing the translucent frame 5 to radiate from a passage through which light from the second light sources 12 passes before allowing the three-dimensional graduation 8 to radiate. Consequently, the translucent frame 5 and the three-dimensional graduation 8 can be made to clearly radiate in corresponding colors different from each other.
The instrumental device 100 as described above is the instrumental device 100 in which the graduations 102 are arranged in an indication range of the pointer that rotates, the device characterized by comprising: the frame member 4 provided in such a manner as to surround the pointer 101 and having a light-shielding property; the dial plate 2 (example of the plate) positioned on the rear side of the frame member 4; the translucent frame 5 positioned between the frame member 4 and the dial plate 2, overlapping with the frame member 4 from a plan view (view in the normal direction of the plane of the dial plate 2 that faces the frame member 4), and protruding beyond the outer periphery side of the frame member 4; the three-dimensional graduation 8 projecting from a side of the dial plate 2 toward the frame member 4; and the first light sources 11 (example of the light sources) positioned on the rear side of the dial plate 2. The insertion portions 4a each made of a notch or an aperture into which the three-dimensional graduation 8 is made to insert are formed in the frame member 4, the three-dimensional graduation 8 exposed out of the insertion portions 4a represents the graduations 102, the transmitter 20 transmitting light from the first light sources 11 is formed in a region of the dial plate 2 that is covered by the translucent frame 5 from the view in the normal direction, and the translucent frame 5 receives the light that has been emitted from the first light sources 11 and has transmitted through the transmitter 20 so as to radiate.

This configuration not only allows the graduations 102 to be three-dimensionally visually recognized but also allows an outer periphery edge of the light-shielding frame member 4 to radiate through the translucent frame 5, which provides an original appearance.
Further, the instrumental device 100 comprises: the light guide for graduation 7 positioned on the rear side of the dial plate 2 and integrally formed with the three-dimensional graduation 8; and, in addition to the first light sources 11, the second light sources 12 positioned on the rear side of the dial plate 2 and emitting light toward the light guide for graduation 7. The translucent frame 5 receives the light that has been emitted from the first light sources 11 and has transmitted through the transmitter 20 so as to radiate,
the three-dimensional graduation 8 has a translucent property, penetrates through the apertures 2a provided in the dial plate 2, and the insertion portions 4a so as to be exposed out of the frame member 4, and radiates with light emitted from the second light sources 12 and guided by the light guide for graduation 7.

This configuration allows not only the translucent frame 5 but also the three-dimensional graduation 8 to glitter, which provides a further original appearance.
Still further, the instrumental device 100 comprises: the interior case 3 (example of the case) on which the dial plate 2 is placed, wherein, in the interior case 3, the wall 34 separating a passage through which light from the first light sources 11 passes before allowing the translucent frame 5 to radiate from a passage through which light from the second light sources 12 passes before allowing the three-dimensional graduation 8 to radiate is formed.

Specifically, the instrumental device 100 further comprises: the light guide for frame 6 facing the translucent frame 5 with the dial plate 2 interposed therebetween, wherein the interior case 3 includes the first concave 31 that houses the light guide for frame 6, and the second concave 32 that houses the light guide for graduation 7, and the wall 34 is provided between the first concave 31 and the second concave 32.

Thereby, the translucent frame 5 and the three-dimensional graduation 8 can be made to radiate while clearly distinguished from each other, which provides a good appearance. Moreover, when the first light sources 11 and the second light sources 12 are lighted up in corresponding colors different from each other, unintentional compound color can be prevented.
Note that the present disclosure is not limited by the above embodiment and the drawings. Appropriate modifications, which include deletion of constituting components, can be added. In the above description, an example in which the pointer 101 is a substantial pointer has been described, but the pointer 101 may be a pointer displayed by an image. In this case, a display device, such as a liquid crystal display or an organic electro-luminescence display, is provided on the rear side of a plate having a configuration similar to that of the dial plate 2, and a translucent portion or a window that allows a display image of the display device to be visually recognized is provided to the plate, so that the display device may display the pointer. Moreover, the numbers 103 may not be formed on the dial plate 2 but may be displayed by the display device.
Moreover, when the translucent frame 5 and the three-dimensional graduation 8 are not made to radiate in corresponding colors different from each other, the three-dimensional graduation 8 can be arranged on the front side of the dial plate 2 as well. In this case, for example, the translucent frame 5 and the three-dimensional graduation 8 may be integrally formed and arranged on the front side of the dial plate 2.
In the above description, an example in which the three-dimensional graduation 8 forms main graduations has been described, but the three-dimensional graduation 8 may also form secondary gradations in addition to the main gradations.
Moreover, in the above description, an example in which the frame member 4, the translucent frame 5, and the light guide for frame 6 are formed into a ring shape has been described, but the frame member 4, the translucent frame 5, and the light guide for frame 6 may be formed into a semi-circular shape, an elliptical shape, a rectangular shape, or the like.
Moreover, in the above description, an example in which the radiating translucent frame 5 protrude beyond the outer periphery side of the frame member 4 has been described, but the radiating translucent frame 5 may protrude inner periphery side, or may protrude both the inner periphery side and the outer periphery side.
Moreover, in the above description, the instrumental device 100 has been described as a device for vehicle, however, the instrumental device 100 may be a device for the other transportation means, such as water craft, farm machine, aircraft, or train. In the above description, to facilitate the understanding of the present disclosure, the description of publicly known technical matters that are not important has been omitted, as appropriate.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.
- 100: instrumental device
- 101: pointer
- 102: graduation
- 103: number
- 1: circuit board
- 11: first light source
- 12: second light source
- 2: dial plate 2a aperture 20 transmitter
- 3: interior case
- 31: first concave
- 32: second concave
- 34: wall
- 4: frame member 4a insertion portion
- 5: translucent frame 5a escape
- 6: light guide for frame
- 7: light guide for graduation
- 8: three-dimensional graduation
- 9: casing

An instrumental device includes: a frame member (4) provided in such a manner as to surround a pointer and having a light-shielding property; a dial plate (2) positioned on a rear side of the frame member (4); a translucent frame (5) positioned between the frame member (4) and the dial plate (2), overlapping with the frame member (4), and protruding beyond an outer periphery side of the frame member (4); a three-dimensional graduation (8) projecting from a side of the dial plate (2) toward the frame member (4); and light sources positioned on the rear side of the dial plate (2). Insertion portions (4a) each made of a notch or an aperture into which the three-dimensional graduation (8) is made to insert are formed in the frame member (4), and the three-dimensional graduation (8) exposed out of the insertion portions (4a) represents graduations. A transmitter (20) transmitting light from the light sources is formed in a region of the dial plate (2) that is covered by the translucent frame (5), and the translucent frame (5) receives the light that has been emitted from the light sources and has transmitted through the transmitter (20) so as to radiate.

## Claims

1. An instrumental device (100) in which graduations (102) are arranged in an indication range of a pointer (101) that rotates, the device including:
a frame member (4) provided in such a manner as to surround the pointer (101) and having a light-shielding property;
a plate (2) positioned on a rear side of the frame member (4);
a three-dimensional graduation (8) projecting from the plate (2) toward the frame member (4); and
light sources (11) positioned on the rear side of the plate (2),
**characterized in that** a translucent frame (5) positioned between the frame member (4) and the plate (2), overlapping with the frame member (4) from a view in a normal direction of a plane of the plate (2) that faces the frame member (4), and protruding beyond at least one of an inner periphery side and an outer periphery side of the frame member (4) is provided,
insertion portions (4a) each made of a notch or an aperture into which the three-dimensional graduation (8) is made to insert are formed in the frame member (4), and the three-dimensional graduation (8) exposed out of the insertion portions (4a) represents the graduations (102),
a transmitter (20) transmitting light from the light sources (11) is formed in a region of the plate (2) that is covered by the translucent frame (5) from the view in the normal direction, and
the translucent frame (5) receives the light that has been emitted from the light sources (11) and has transmitted through the transmitter (20) so as to radiate.

2. The instrumental device (100) according to Claim 1, **characterized by** comprising:
a light guide for graduation (7) positioned on the rear side of the plate (2) and integrally formed with the three-dimensional graduation (8); and
in addition to the first light sources (11) that are the light sources (11), second light sources (12) positioned on the rear side of the plate (2) and emitting light toward the light guide for graduation (7),
wherein the translucent frame (5) receives the light that has been emitted from the first light sources (11) and has transmitted through the transmitter (20) so as to radiate, and
the three-dimensional graduation (8) has a translucent property, penetrates through apertures (2a) provided in the plate (2), and the insertion portions (4a) so as to be exposed out of the frame member (4), and radiates with light emitted from the second light sources (12) and guided by the light guide for graduation (7).

3. The instrumental device (100) according to Claim 2, **characterized by** comprising:
a case (3) on which the plate (2) is placed,
wherein, in the case (3), a wall (34) separating a passage through which light from the first light sources (11) passes before allowing the translucent frame (5) to radiate from a passage through which light from the second light sources (12) passes before allowing the three-dimensional graduation (8) to radiate is formed.

4. The instrumental device (100) according to Claim 3, **characterized by** further comprising:
a light guide for frame (6) facing the translucent frame (5) with the plate (2) interposed therebetween,
wherein the case (3) includes a first concave (31) that houses the light guide for frame (6), and a second concave (32) that houses the light guide for graduation (7), and
the wall (34) is provided between the first concave (31) and the second concave (32).

5. The instrumental device (100) according to any one of Claims 2 to 4, **characterized in that**
at least one of the first light sources (11) and the second light sources (12) emit light in two or more colors, and
the three-dimensional graduation (8) and the translucent frame (5) are made to radiate in corresponding colors different from each other.

## Patentansprüche

1. Instrumentenvorrichtung (100), in welcher Abstufungen (102) in einem Anzeigebereich eines Zeiger (101), welcher rotiert, angeordnet sind, wobei die Vorrichtung umfasst:
ein Rahmenelement (4), welches derart bereitgestellt ist, den Zeiger (101) zu umgeben, und welches eine licht-abschirmende Eigenschaft aufweist;
eine Platte (2), welche an einer Rückseite des Rahmenelements (4) positioniert ist;
eine dreidimensionale Abstufung (8), welche von der Platte (2) in Richtung des Rahmenelements (4) vorsteht; und
Lichtquellen (11), welche an der Rückseite der Platte (2) positioniert sind,
**dadurch gekennzeichnet, dass** ein lichtdurchlässiger Rahmen (5),
welcher zwischen dem Rahmenelement (4) und der Platte (2) positioniert ist, welcher mit dem Rahmenelement (4), aus einer Sicht in einer normalen Richtung einer Ebene der Platte (2), welche zu dem Rahmenelement (4) weist, überlappt, und welcher über wenigstens eines aus einer inneren Umfangsseite und einer äußeren Umfangseite des Rahmenelements (4) vorsteht, bereitgestellt ist,
Einsetzabschnitte (4a), wobei jeder aus einer Kerbe oder einer Öffnung gebildet ist, in welche die dreidimensionale Abstufung (8) gebildet ist,
eingesetzt zu werden, in dem Rahmenelement (4) gebildet sind, und
die dreidimensionale Abstufung (8), welche aus den Einsetzabschnitten (4a) freigelegt ist, die Abstufungen (102) darstellt,
ein Transmitter (20), welcher Licht von den Lichtquellen (11) überträgt,
in einem Bereich der Platte (2) gebildet ist, welcher durch den lichtdurchlässigen Rahmen (5), von der Sicht in der normalen Richtung,
abgedeckt ist, und
der lichtdurchlässige Rahmen (5) das Licht, welches von den Lichtquellen (11) emittiert worden ist und durch den Transmitter (20) übertragen wurde, empfängt, um zu strahlen.

2. Instrumentenvorrichtung (100) nach Anspruch 1, **dadurch gekennzeichnet, dass** sie umfasst:
eine Lichtführung für eine Abstufung (7), welche an der Rückseite der Platte (2) positioniert ist und mit der dreidimensionalen Abstufung (8) integral gebildet ist; und
zusätzlich zu den ersten Lichtquellen (11), welche die Lichtquellen (11) sind, zweite Lichtquellen (12), welche an der Rückseite der Platte (2) positioniert sind und Licht in Richtung der Lichtführung für eine Abstufung (7) emittieren,
wobei der lichtdurchlässige Rahmen (5) das Licht, das von den ersten Lichtquellen (11) emittiert worden ist und durch den Transmitter (20) übertragen wurde, empfängt, um zu strahlen, und
die dreidimensionale Abstufung (8) eine lichtdurchlässige Eigenschaft aufweist, durch Öffnungen (2a), welche in der Platte (2) bereitgestellt sind, und die Einsetzabschnitte (4a) tritt, um aus dem Rahmenelement (4) freigelegt zu sein, und mit Licht strahlt, welches von den zweiten Lichtquellen (12) emittiert ist und durch die Lichtführung für eine Abstufung (7) geführt ist.

3. Instrumentenvorrichtung (100) nach Anspruch 2, **dadurch gekennzeichnet, dass** sie umfasst:
ein Gehäuse (3), an welcher die Platte (2) platziert ist, wobei, in dem Gehäuse (3), eine Wand (34) gebildet ist, welche einen Durchgang, durch welchen Licht von den ersten Lichtquellen (11) tritt,
bevor dem lichtdurchlässigen Rahmen (5) erlaubt wird, zu strahlen, von einem Durchgang trennt, durch welchen Licht von den zweiten Lichtquellen (12) tritt, bevor der dreidimensionalen Abstufung (8) erlaubt wird, zu strahlen.

4. Instrumentenvorrichtung (100) nach Anspruch 3, **dadurch gekennzeichnet, dass** sie ferner umfasst:
eine Lichtführung für einen Rahmen (6), welcher zu dem lichtdurchlässigen Rahmen (5) weist, wobei die Platte (2) dazwischen angeordnet ist,
wobei das Gehäuse (3) eine erste Höhlung (31), welche die Lichtführung für einen Rahmen (6) aufnimmt, und eine zweite Höhlung (32) umfasst, welche die Lichtführung für eine Abstufung (7) aufnimmt,
und
die Wand (34) zwischen der ersten Höhlung (31) und der zweiten Höhlung (32) bereitgestellt ist.

5. Instrumentenvorrichtung (100) nach einem der Ansprüche 2 bis 4, **dadurch gekennzeichnet, dass**
wenigstens eines aus den ersten Lichtquellen (11) und den zweiten Lichtquellen (12) Licht in zwei oder mehr Farben emittiert, und
die dreidimensionale Abstufung (8) und der lichtdurchlässige Rahmen (5) veranlasst werden, in entsprechenden voneinander verschiedenen Farben zu strahlen.

## Revendications

1. Dispositif instrumental (100) dans lequel des graduations (102) sont agencées dans une plage d'indication d'une aiguille (101) qui tourne, le dispositif comportant :
un organe de cadre (4) prévu de manière à entourer l'aiguille (101) et ayant une propriété de protection contre la lumière ;
une plaque (2) positionnée sur un côté arrière de l'organe de cadre (4) ;
une graduation tridimensionnelle (8) se projetant à partir de la plaque (2) vers l'organe de cadre (4) ; et
des sources de lumière (11) positionnées sur le côté arrière de la plaque (2),
**caractérisé en ce qu'**un cadre translucide (5) positionné entre l'organe de cadre (4) et la plaque (2), chevauchant l'organe de cadre (4) depuis une vue dans une direction normale d'un plan de la plaque (2) qui fait face à l'organe de cadre (4), et dépassant au-delà au moins d'un côté de périphérie intérieur et d'un côté de périphérie extérieur de l'organe de cadre (4) est prévu,
des portions d'insertion (4a) constituées chacune d'une encoche ou d'une ouverture dans laquelle la graduation tridimensionnelle (8) est amenée à s'insérer sont formées dans l'organe de cadre (4), et la graduation tridimensionnelle (8) exposée hors des portions d'insertion (4a) représente les graduations (102),
un émetteur (20) transmettant la lumière provenant des sources de lumière (11) est formé dans une région de la plaque (2) qui est couverte par le cadre translucide (5) depuis la vue dans la direction normale, et
le cadre translucide (5) reçoit la lumière qui a été émise en provenance des sources de lumière (11) et a été transmise par l'intermédiaire de l'émetteur (20) de façon à rayonner.

2. Dispositif instrumental (100) selon la revendication 1, **caractérisé en ce qu'**il comprend :
un guide de lumière pour la graduation (7) positionné sur le côté arrière de la plaque (2) et formé d'un seul tenant avec la graduation tridimensionnelle (8) ; et
en plus des premières sources de lumière (11) qui sont les sources de lumière (11), des secondes sources de lumière (12) positionnées sur le côté arrière de la plaque (2) et émettant de la lumière vers le guide de lumière pour la graduation (7),
dans lequel le cadre translucide (5) reçoit la lumière qui a été émise en provenance des premières sources de lumière (11) et a été transmise par l'intermédiaire de l'émetteur (20) de façon à rayonner, et
la graduation tridimensionnelle (8) a une propriété translucide, pénètre à travers des ouvertures (2a) prévues dans la plaque (2), et les portions d'insertion (4a) de façon à être exposée hors de l'organe de cadre (4), et rayonne avec la lumière émise en provenance des secondes sources de lumière (12) et guidée par le guide de lumière pour la graduation (7).

3. Dispositif instrumental (100) selon la revendication 2, **caractérisé en ce qu'**il comprend :
un boîtier (3) sur lequel est placée la plaque (2),
dans lequel, dans le boîtier (3), une paroi (34) séparant un passage à travers lequel passe la lumière provenant des premières sources de lumière (11) avant de permettre au cadre translucide (5) de rayonner d'un passage à travers lequel passe la lumière provenant des secondes sources de lumière (12) avant de permettre à la graduation tridimensionnelle (8) de rayonner, est formée.

4. Dispositif instrumental (100) selon la revendication 3, **caractérisé en ce qu'**il comprend en outre :
un guide de lumière pour le cadre (6) faisant face au cadre translucide (5) avec la plaque (2) intercalée entre eux,
dans lequel le boîtier (3) comporte un premier concave (31) qui loge le guide de lumière pour le cadre (6), et un second concave (32) qui loge le guide de lumière pour la graduation (7), et
la paroi (34) est prévue entre le premier concave (31) et le second concave (32).

5. Dispositif instrumental (100) selon l'une quelconque des revendications 2 à 4, **caractérisé en ce que**
au moins l'une des premières sources de lumière (11) et des secondes sources de lumière (12) émet de la lumière en deux couleurs ou plus, et
la graduation tridimensionnelle (8) et le cadre translucide (5) sont amenés à rayonner dans des couleurs correspondantes différentes l'une de l'autre.
